# EUROPEAN PATENT SPECIFICATION

(11) **EP 1 676 089 B1**
(45) Date of publication and mention of the grant of the patent: **07.07.2010**
(21) Application number: 04775426.2
(22) Date of filing: 20.09.2004
(51) Int. Cl.: F28F 9/16, B23K 1/00, B21D 53/04

(54) **A PLATE HEAT EXCHANGER**
PLATTENWÄRMETAUSCHER
ECHANGEUR THERMIQUE A PLAQUES

(30) Priority: 17.10.2003 SE 0302748
(43) Date of publication of application: 05.07.2006
(73) Proprietor: Alfa Laval Corporate AB, 22100 Lund (SE)
(72) Inventor: Sjödin, Per, S-223 61 Lund (SE); Dahlberg, Per-Olof, S-226 54 Lund (SE)
(74) Representative: Berglund, Stefan
(86) International application number: PCT/SE2004/001322
(87) International publication number: WO 2005/038382

(56) References cited:
- WO-A1-03/058142
- DE-A1- 19 805 439
- GB-A- 820 153
- GB-A- 2 322 323
- US-A- 4 223 826

## Description

### THE BACKGROUND OF THE INVENTION AND PRIOR ART

The present invention refers to a plate heat exchanger including a number of heat exchanger plates, which are arranged beside each other and connected to each other by means of a braze connection, wherein the heat exchanger plates substantially are manufactured in stainless steel containing chromium, wherein the plate heat exchanger includes a number of port channels extending through at least some of the heat exchanger plates, and wherein one or more of the port channels are surrounded by a connection surface for connection of the port channel to a pipe member. Such a heat exchanger is shown in WO-A- 03/058142.

The invention also refers to a method for manufacturing a plate heat exchanger including a number of heat exchanger plates, which substantially are manufactured in stainless steel containing chromium, and including a number port channels extending through at least some of the heat exchanger plates, wherein each port channel is surrounded by a connection surface for connection of the port channel to a pipe member.

The heat exchanger plates in plate heat exchangers are frequently manufactured in stainless steel for resisting attacks from various media transported through the heat exchanger. These media may frequently be aggressive against metallic materials. The heat exchanger plates are connected to each other by brazing during a braze process with a braze material based on e.g. copper, nickel, iron or silver. The braze process is normally performed in a closed space at vacuum-like pressure conditions or a gas atmosphere, and at a relatively high temperature, for instance about 1100°C with copper as braze material and about 1200°C with nickel as braze material.

In order to connect the channels of the plate heat exchanger to external media-conveying conduits, it is often desirable to braze various types of pipes and conduits to a connection surface of the plate heat exchanger around the port channels. However, it is difficult to braze to stainless steel containing a relatively high percentage of chromium, for instance above 12 percent. According to one theory, this difficulty depends on the fact that the surface layer of the stainless steel contains a high percentage chromium dioxide. In order to make the braze attach to the stainless steel, it is necessary to reduce the chromium dioxide. Chromium dioxide is however difficult to reduce by common fluxing agents having a small toxicity or aggressiveness but it is necessary to make use of more aggressive and toxic fluxing agents, for instance fluxing agents containing fluorine. It would thus for environmental and health reasons be necessary to perform also the brazing of said pipe member in a closed space.

### SUMMARY OF THE INVENTION

The object of this invention is to remedy the problems mentioned above. More precisely, the object is to provide a plate heat exchanger offering improved possibilities to attach connection conduits by means of brazing.

This object is achieved by the plate heat exchanger initially defined, which is **characterised in that** the connection surface includes a material that permits brazing of said pipe member to the connection surface in a more easy manner than to stainless steel, wherein said material is more reduction susceptible than chromium dioxide.

By providing the plate heat exchanger with such a material at the port channels, pipe members, such as external conduits, may in an easy manner be connected to the respective port channel through a braze process that may be performed during normal surrounding conditions. It is thus possible to perform these connections at an arbitrary location, for instance where the plate heat exchanger is to be used. Said material is more reduction susceptible than chromium dioxide, i e the oxide formed on the material may be reduced in a more easy manner than chromium dioxide, and thus strong and reliable braze joint is achieved by easy means. Suitable materials are based on or include one of the materials copper and nickel.

According to an embodiment of the invention, said braze connection of the heat exchanger plates is achieved through a braze process. The braze process may be performed in vacuum or in a gas atmosphere consisting substantially of an inert gas or a reducing gas. Furthermore, said material may be bound to the stainless steel through diffusion, wherein said diffusion is achieved during said braze process. Thanks to such a diffusion of atoms from the material into the steel, and from the steel into the material, a strong metallic bond is achieved.

One of said heat exchanger plates forms an outer heat exchanger plate which has a respective outer surface surrounding a respective port channel. According to a further embodiment of the invention, said material may be applied to the outer surface for forming said connection surface. In this case the connection surface is thus formed directly on the outer heat exchanger plate which is designed to permit brazing of a connection pipe.

According to another embodiment of the invention, the plate heat exchanger includes a connection member at each port channel, wherein the connection member forms said connection surface. Advantageously, the connection member is attached to the outer surface area. The connection member may have a primary surface onto which said material is applied for forming said connection surface. Also in this case, said material may be applied on the primary surface and bound to the connection member by diffusion achieved during said braze process.

According to a further embodiment of the invention the primary surface has a rough surface finish, which is accomplished by abrasive blasting or any similar roughening process and which facilitates wetting of the primary surface with said material. Advantageously, said material may then have been applied onto the primary surface by means of and during the braze process, wherein the material due to the roughened surface will flow out and be distributed over the primary surface. The connection member may substantially be manufactured in stainless steel containing chromium.

According to a further embodiment of the invention, the connection member is manufactured in an alloy substantially containing copper and nickel. The connection surface will then be formed by this alloy which on the surface oxidises to nickel oxide and copper oxide, both of which are relatively easily reducible. It is suggested that said alloy may contain 55 to 95 percent by weight copper and 5 to 45 percent by weight nickel, In particular 70 to 80 percent copper and 20 to 30 percent nickel.

According to a further embodiment of the invention, the connection member is designed as a pipe nipple, wherein the substantially cylindrical inner or outer surface of the pipe nipple forms the connection surface. Alternatively, the connection member may be designed as a washer.

The object is also achieved by the method initially defined, which includes the steps of:
applying a material, which forms the connection surface and which permits brazing of said pipe member to the connection surface in a more easy manner than to stainless steel, wherein said material is more reduction susceptible than chromium dioxide, arranging the heat exchanger plates beside each other, and
joining the heat exchanger plates to each other by means of a braze connection.

Preferred embodiments of the method are defined in the dependent claims 20 to 30.

### BRIEF DESCRIPTION OF THE DRAWINGS

The invention is now to be explained more closely by means of various embodiments and with reference to the drawings attached.
- Fig. 1: discloses schematically a plan view of a plate heat exchanger according to a first embodiment of the invention.
- Fig. 2: discloses schematically a side view of the plate heat exchanger in Fig. 1.
- Fig. 3: discloses schematically a plan view of a plate heat exchanger according to a second embodiment of the invention.
- Fig. 4: discloses schematically a side view of the plate heat exchanger in Fig. 3.
- Fig. 5: discloses schematically a plan view of a plate heat exchanger according to a third embodiment of the invention.
- Fig 6.: discloses schematically a side view of the plate heat exchanger in Fig. 5.

### DETAILED DESCRIPTION OF VARIOUS EMBODIMENTS OF THE INVENTION

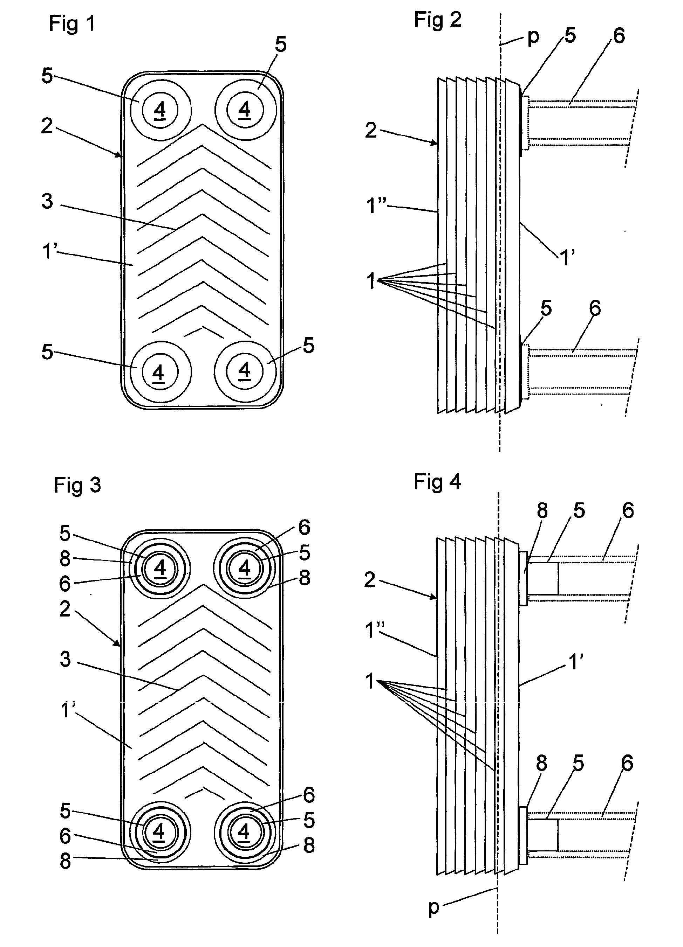

Figs. 1 to 6 disclose different embodiments of a plate heat exchanger. The plate heat exchanger includes in all embodiments a number of heat exchanger plates 1, which are arranged beside each other to form a plate package 2. Each heat exchanger plate 1 includes in a manner known per se a corrugation 3 for increasing the heat transfer, and four port holes for forming a corresponding number of port channels 4 extending through the plate package 2. It is to be noted that the plate package 2 may include another number of port channels 4 than the four disclosed in the embodiments in Figs. 1 to 6.

The plate package 2 includes a first outer heat exchanger plate 1' and a second outer heat exchanger plate 1 ". Between these heat exchanger plates the remaining heat exchanger plates 1 are arranged. In the embodiments disclosed, the first outer heat exchanger plate 1 has also been provided with port holes aligned to the port channels 4, whereas the second outer heat exchanger plate 1' does not have any port holes. The heat exchanger plates 1, 1', 1 " are arranged in such a way that they extend substantially in parallel to a common main extension plane p.

The heat exchanger plates 1, 1', 1" are substantially manufactured in stainless steel containing chromium. The chromium percentage means that the surface layer of the heat exchanger plates 1, 1', 1" will contain chromium dioxide which is difficult to reduce. The heat exchanger plates 1, 1', 1 " are connected to each other by means of a braze connection. The brazing takes place by means of a braze material based on or containing copper, nickel, iron or silver and possibly any possible flux agent that can contain fluorine and that enables reduction of chromium dioxide. A thin foil of the braze material is positioned in each interspace between the heat exchanger plates 1, 1', 1 ". Thereafter, the plate package 2 is compressed. The compressed plate package 2 may by placed in a closed space (not disclosed), such as a vacuum furnace, during vacuum-like pressure conditions or in a gas atmosphere consisting of a substantially inert gas or a reducing gas, and a desired braze temperature which may be up to about 1100°C with copper as braze material and about 1200°C with nickel as braze material.

A first embodiment of the invention is now to be explained more closely with reference to Figs. 1 and 2. Each port channel 4 is surrounded by a connection surface 5 for connection of the port channel 4 to a pipe member 6, for instance in the form of an external pipe conduit. The connection surfaces 5 are thus located on the first outer heat exchanger plate 1' which has an outer surface area surrounding each port channel 4. The connection surfaces 5 thus extend substantially in parallel to the main extension plane p of the heat exchanger plates 1, 1', 1" and have been formed by a material applied to the outer surface area. This material permits brazing of the pipe members 6 to the respective connection surface in a more easy manner than stainless steel and is more reduction susceptible than chromium dioxide. In particular, this material may be based on or include one of the materials copper, nickel, iron or silver. Possibly the material may also include a suitable fluxing agent.

According to this first embodiment, the outer surface areas may thus be coated by a thin layer of for instance nickel. The layer may have a thickness which amounts to about 20 to 50 µm. The layer may be applied by different methods, for instance by melting or chemical or electrolytic plating. This application of the material may advantageously be made prior to the brazing of the plate package 2, and thus before the plate package 2 is subjected to the above-mentioned vacuum/gas atmosphere and the above-mentioned braze temperature. The nickel material will during this braze process be bound to the stainless steel of the outer surface areas of the first heat exchanger plate 1' in such a way that a very strong bond is achieved through diffusion.

It is to be noted that the layer of nickel material also may be applied after the plate package has been brazed according to the above description of the braze process. Also in this case, nickel or any other material may be applied through melting or chemical or electrolytic plating.

According to a second embodiment illustrated in Figs. 3 and 4, the plate heat exchanger includes four connection members. In this embodiment, each connection member is designed as a pipe nipple 8. The pipe nipples 8 are attached to the outer surface area at a respective one of the four port channels 4. Each pipe nipple 8 is in this embodiment, as well as the heat exchanger plates 1, 1', 1", substantially manufactured in stainless steel containing chromium. Each pipe nipple 8 has a primary surface on which the layer with the above-mentioned material is applied for forming the connection surface 5. In the embodiment disclosed, the primary surface is formed by an outer cylindrical surface of the pipe nipple 8. However, it is also possible to let the inner cylindrical surface of the pipe nipple 8 form the primary surface onto which the layer with material is applied. The pipe nipples 8 may advantageously be applied to the plate package 2 before it is brazed. A foil of braze material is applied before said braze process between the pipe nipples 8 and the first outer heat exchanger plate 1', wherein the pipe nipples 8 will be brazed to the first outer heat exchanger plate 1'. The pipe nipples 8 may also be attached by other methods, for instance welding.

According to a first variant of this embodiment, the layer of material is applied in a similar manner as according to the first embodiment described above. Consequently, the primary surface may be coated by a thin layer of for instance nickel. The layer may have a thickness which amounts to about 20 to 50µm. The layer may be applied by different methods, for instance melting or chemical or electrolytic plating. This application of the material may advantageously be made prior to the brazing of the plate package 2 and the pipe nipples 8, and thus before the plate package 2 and the pipe nipples 8 are subjected to the above-mentioned vacuum or gas atmosphere, and the above defined braze temperature. The nickel material applied to the primary surface of the pipe nipples 8 will during this braze process be bound to the stainless steel of the primary surface on the pipe nipples 8 in such a way that a very strong metallic bond is achieved through diffusion.

It is to be noted that the layer also may include a material based on copper. In this case it is however important that a braze material with a lower melt temperature than copper is used for the brazing of the heat exchanger plates 1, 1', 1 ". During brazing, a braze temperature that is lower than the melt temperature of the material applied to the pipe nipples 8 has to be used since this material must not melt and flow away from the pipe nipples 8.

According to a second variant of the second embodiment, the primary surface is provided with a rough surface finish. This rough primary surface may be accomplished by blasting or any similar roughening method. The roughening is made as an initial step before the pipe nipples 8 are mounted to the plate package 2. Such a rough primary surface facilitates wetting with the mentioned material and means that the material during the above described brazing of the plate package 2 will flow out over the primary surface in such a way that a strong layer of the material is formed on the primary surface. This layer, which thus may include any of the materials copper, nickel, iron or silver, may also have a thickness of about 20 to 50 p and form a connection surface 5 with proper braze properties. Different types of pipe members 6 may then be brazed to this connection surface 5 by means of simple, conventional braze methods.

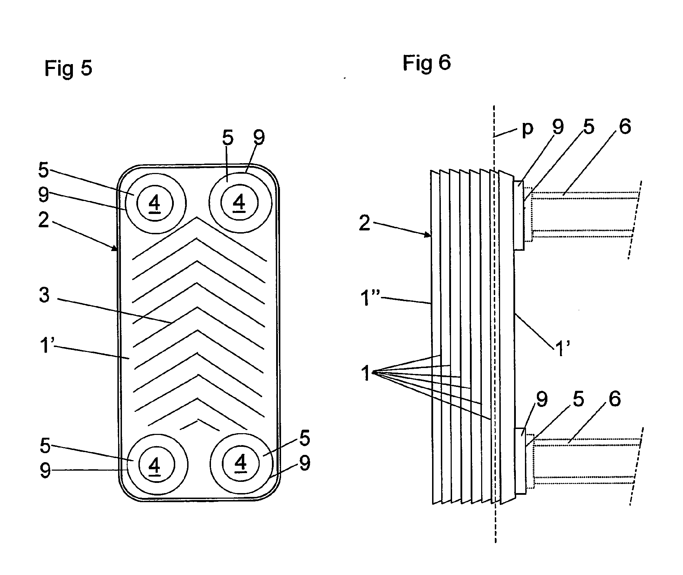

A third embodiment is illustrated in Figs. 5 and 6. This embodiment also includes four connection members, one around each port hole 4. In this embodiment, each connection member is however designed as a washer 9. The washers 9 are attached to the outer surface area of the outer heat exchanger plate 1' at a respective one of the port channels 4. Each washer 9 has an outer plane surface forming a substantially plane connection surface 5 to which a pipe member 6 may be attached in a similar manner as in the embodiment disclosed in Figs. 1 and 2. Furthermore, each washer 9 in this embodiment is manufactured in an alloy containing mainly copper and nickel. By the addition of nickel to copper the melt temperature of the alloy may be increased, the higher percentage of nickel the higher the melt temperature. Preferably, the alloy is to contain only so much nickel that the melt temperature becomes higher than the melt temperature of the braze material used for brazing the plate package and for brazing the washers 9 to the outer heat exchanger plate 1'. For instance the alloy may contain 55, 60, 65, 70, 75, 80, 85, 90 or 95 percent by weight copper and a corresponding percentage nickel, i.e. 5, 10, 15, 20, 25, 30, 35, 40 or 45 percent by weight nickel. The washers 9 may as well as in the embodiment disclosed in Figs. 3 and 4 be attached in various ways to the outer heat exchanger plate 1'.

It is to be noted that the connection members which are manufacture in stainless steel and which are disclosed in Figs. 3 and 4 as an alternative may be designed as washers 9 and that the connection members manufactured in an alloy of copper and nickel and disclosed in Figs. 5 and 6 as an alternative may be designed as pipe nipples 8. Also other shapes of the disclosed connections member than pipe nipples 8 and washers 9 are possible.

The invention is not limited to the embodiments disclosed but may be varied and modified within a scope of the following claims.

## Claims

1. A plate heat exchanger including a number of heat exchanger plates (1, 1', 1"), which are arranged beside each other and connected to each other by means of a braze connection,
wherein the heat exchanger plates (1, 1', 1") are substantially manufactured in stainless steel containing chromium,
wherein the plate heat exchanger includes a number of port channels (4) extending through at least some of the heat exchanger plates, and
wherein one or more of the port channels (4) are surrounded by a connection surface (5) for connection of the port channel to a pipe member (6),
**characterised in that** the connection surface (5) includes a material that permits brazing of said pipe member (6) to the connection surface (5) in a more easy manner than to stainless steel, wherein said material is more reduction susceptible than chromium dioxide.

2. A plate heat exchanger according to claim 1, **characterised in that** said material includes nickel.

3. A plate heat exchanger according to anyone of claims 1 and 2, **characterised in that** said material includes copper.

4. A plate heat exchanger according to anyone of the preceding claims, **characterised in that** said braze connection of the heat exchanger plates is accomplished by a braze process.

5. A plate heat exchanger according to anyone of the preceding claims, **characterised in that** said material is bound to the stainless steel through diffusion.

6. A plate heat exchanger according to claims 4 and 5, **characterised in that** said diffusion is accomplished during said braze process.

7. A plate heat exchanger according to anyone of the preceding claims, **characterised in that** one of said heat exchanger plates (1, 1', 1") forms an outer heat exchanger plate (1') which has a respective outer surface area surrounding a respective port channel.

8. A plate heat exchanger according to claim 7, **characterised in that** said material is supplied to the outer surface area for forming said connection surface (5).

9. A plate heat exchanger according to anyone of the preceding claims, **characterised in that** the plate heat exchanger includes a connection member (8; 9) at each port channel (4), wherein the connection member (8, 9) forms said connection surface (5).

10. A plate heat exchanger according to claims 7 and 9, **characterised in that** the connection member ( 8, 9) is attached to outer surface area.

11. A plate heat exchanger according to anyone of claims 9 and 10, **characterised in that** the connection member (8, 9) has a primary surface onto which said material is applied for forming said connection surface (5).

12. A plate heat exchanger according to claim 11, **characterised in that** the primary surface has a rough surface finish, which is accomplished through abrasive blasting or any similar roughening process and which facilitates wetting of the primary surface with said material.

13. A plate heat exchanger according to claims 4 and 12, **characterised in that** said material has been applied onto the primary surface by means of and during the braze process.

14. A plate heat exchanger according to anyone of claims 9 to 13, **characterised in that** the connection member (8,9) is substantially manufactured in a stainless containing chromium.

15. A plate heat exchanger according to anyone of claims 9 and 10, **characterised in that** the connection member (8, 9) is manufactured in an alloy substantially containing copper and nickel.

16. A plate heat exchanger according to claim 15, **characterised in that** said alloy contains 55 to 95 percent by weight copper and 5 to 45 percent by weight nickel.

17. A plate heat exchanger according to anyone of claims 9 and 16, **characterised in that** the connection member is designed as a pipe nipple (8).

18. A plate heat exchanger according to anyone of claims 9 and 16, **characterised in that** the connection member is designed as a washer (8).

19. A method for manufacturing a plate heat exchanger including a number of heat exchanger plates, which are substantially manufactured in stainless steel containing chromium, and including a number of port channels extending through at least some of the heat exchanger plates,
wherein one or more of the port channels are surrounded by a connection surface for connection of the port channel to a pipe member,
wherein the method includes the steps of:
applying a material, which forms the connection surface and which permits brazing of said pipe member to the connection surface in a more easy manner than to stainless steel, wherein said material is more reduction susceptible than chromium dioxide,
arranging the heat exchanger plates beside each other, and
joining the heat exchanger plates to each other by means of a braze connection.

20. A method according to claim 19, wherein said material includes nickel.

21. A method according to anyone of claims 19 and 20, wherein said material includes copper.

22. A method according to anyone of claims 19 to 21, wherein said connection step includes a braze process with brazing of the heat exchanger plates at vacuum-like pressure conditions or in an atmosphere with substantially inert gas or a reducing gas.

23. A method according to anyone of claims 19 to 22, wherein the brazing is performed in such a manner that said material is bound to the stainless steel through diffusion.

24. A method according to anyone of claims 19 to 23, wherein one of said heat exchanger plates forms an outer heat exchanger plate having a respective outer surface area surrounding a respective port channel and wherein said application step includes that said material is applied to the outer surface area for forming said connection surface.

25. A method according to anyone of claim 19 to 24, wherein one of said heat exchanger plates forms an outer heat exchanger plate having a respective outer surface area surrounding a respective port channel and wherein the method includes the step of:
applying a connection member to the outer surface area at each port channel before said connection step, wherein the connection member forms said connection surface.

26. A method according to claim 25, wherein the connection member has a primary surface and wherein said application step includes applying said material to the primary surface for forming said connection surface by means of and during said braze process.

27. A method according to claim 26, including the initial step roughening the primary surface through blasting or the like for accomplishing rough surface finish facilitating wetting of the primary surface by said material during said braze process.

28. A method according to claims 25 to 27, wherein the connection member (8, 9) is substantially manufactured in stainless steel containing chromium.

29. A method according to claim 28, wherein the connection member (8; 9) is substantially manufactured in an alloy substantially containing copper and nickel.

30. A method according to claim 29, wherein said alloy includes 55 to 95 percent by weight copper and 5 to 45 percent by weight nickel.

## Patentansprüche

1. Plattenwärmetauscher mit einer Anzahl von Wärmetauschplatten (1, 1', 1"), die nebeneinander angeordnet und miteinander über eine Lötverbindung verbunden sind,
wobei die Wärmetauschplatten (1,1', 1") im Wesentlichen aus rostfreiem Stahl hergestellt sind, der Chrom enthält,
wobei der Plattenwärmetauscher eine Anzahl von Durchgangskanälen (4) umfasst, die sich durch mindestens eine der Wärmetauschplatten erstrecken, und
wobei einer oder mehrere der Durchgangskanäle (4) von einer Verbindungsfläche (5) zum Verbinden des Durchgangskanals mit einem Rohrelement (6) umgeben sind,
**dadurch gekennzeichnet, dass** die Verbindungsfläche (5) ein Material umfasst, das ein Löten des Rohrelements (6) an die Verbindungsfläche (5) in leichterer Weise erlaubt als an den rostfreien Stahl, wobei das Material stärker reduktionsempfänglich ist als Chromdioxid.

2. Plattenwärmetauscher nach Anspruch 1, **dadurch gekennzeichnet, dass** das Material Nickel umfasst.

3. Plattenwärmetauscher nach einem der Ansprüche 1 und 2, **dadurch gekennzeichnet, dass** das Material Kupfer umfasst.

4. Plattenwärmetauscher nach einem der vorangegangenen Ansprüche, **dadurch gekennzeichnet, dass** die Lötverbindung der Wärmetauschplatten mittels eines Lötprozesses erfolgt.

5. Plattenwärmetauscher nach einem der vorangegangenen Ansprüche, **dadurch gekennzeichnet, dass** das Material durch Diffusion an den rostfreien Stahl gebunden ist.

6. Plattenwärmetauscher nach Anspruch 4 und 5, **dadurch gekennzeichnet, dass** die Diffusion während des Lötprozesses erfolgt.

7. Plattenwärmetauscher nach einem der vorangegangenen Ansprüche, **dadurch gekennzeichnet, dass** eine der Wärmetauschplatten (1, 1',1") eine äußere Wärmetauschplatte (1') bildet, die einen jeweiligen äußeren Oberflächenbereich hat, der einen jeweiligen Durchgangskanal umgibt.

8. Plattenwärmetauscher nach Anspruch 7, **dadurch gekennzeichnet, dass** das Material dem äußeren Oberflächenbereich zugeführt wird, um die Verbindungsfläche (5) zu bilden.

9. Plattenwärmetauscher nach einem der vorangegangenen Ansprüche, **dadurch gekennzeichnet, dass** der Plattenwärmetauscher an jedem Durchgangskanal (4) ein Verbindungselement (8, 9) umfasst, wobei das Verbindungselement (8, 9) die Verbindungsfläche (5) bildet.

10. Plattenwärmetauscher nach Anspruch 7 und 9, **dadurch gekennzeichnet, dass** das Verbindungselement (8, 9) am äußeren Oberflächenbereich befestigt ist.

11. Plattenwärmetauscher nach einem der Ansprüche 9 und 10, **dadurch gekennzeichnet, dass,** das Verbindungselement (8, 9) eine Primäroberfläche hat, auf die das Material aufgebracht wird, um die Verbindungsfläche (5) zu bilden.

12. Plattenwärmetauscher nach Anspruch 11, **dadurch gekennzeichnet, dass** die Primäroberfläche ein raues Oberflächenfinish hat, das durch Reinigungsstrahlen oder irgendeinen ähnlichen Aufrauungsprozess erreicht wird und das ein Befeuchten der primären Oberfläche mit dem Material ermöglicht.

13. Plattenwärmetauscher nach Anspruch 4 und 12, **dadurch gekennzeichnet, dass** das Material mittels und während des Lötprozesses auf die Primäroberfläche aufgebracht wird.

14. Plattenwärmetauscher nach einem der Ansprüche 9 bis 13, **dadurch gekennzeichnet, dass** das Verbindungselement (8, 9) im Wesentlichen aus rostfreiem Stahl hergestellt ist, der Chrom enthält.

15. Plattenwärmetauscher nach einem der Ansprüche 9 und 10, **dadurch gekennzeichnet, dass** das Verbindungselement (8, 9) aus einer Legierung hergestellt wird, die im Wesentlichen Kupfer und Nickel enthält.

16. Plattenwärmetauscher nach Anspruch 15, **dadurch gekennzeichnet, dass** die Legierung 55-95 Gew.-% Kupfer und 5-45 Gew-% Nickel enthält.

17. Plattenwärmetauscher nach einem der Ansprüche 9 und 16, **dadurch gekennzeichnet, dass** das Verbindungselement als Rohrnippel (8) ausgeführt ist.

18. Plattenwärmetauscher nach einem der Ansprüche 9 und 16, **dadurch gekennzeichnet, dass** das Verbindungselement als Scheibe (8) ausgeführt ist.

19. Verfahren zur Herstellung eines Plattenwärmetauschers mit einer Anzahl von Wärmetauschplatten, die im Wesentlichen aus rostfreiem Stahl hergestellt sind, der Chrom enthält, und mit einer Anzahl von Durchgangskanälen, die sich durch mindestens einige der Wärmetauschplatten erstrecken,
wobei einer oder mehrere der Durchgangskanäle von einer Verbindungsfläche zur Verbindung des Durchgangskanals mit einem Rohrelement umgeben ist,
wobei das Verfahren die folgenden Schritte umfasst:
Aufbringen eines Materials, das die Verbindungsfläche bildet und ein Löten des Rohrelementes an die Verbindungsfläche in leichterer Weise als an rostfreien Stahl erlaubt, wobei das Material stärker reduktionsempfänglich ist als Chromdioxid, Anordnen der Wärmetauschplatten nebeneinander, und Verbinden der Wärmetauschplatten miteinander mittels einer Lötverbindung.

20. Verfahren nach Anspruch 19, wobei das Material Nickel umfasst.

21. Verfahren nach einem der Ansprüche 19 und 20, wobei das Material Kupfer umfasst.

22. Verfahren nach einem der Ansprüche 19 bis 21, wobei der Verbindungsschritt einen Lötprozess umfasst, bei dem die Wärmetauschplatten unter vakuumartigen Druckbedingungen oder in einer Umgebung mit im Wesentlichen Edelgas oder Reduktionsgas miteinander verlötet werden.

23. Verfahren nach einem der Ansprüche 19 bis 22, wobei das Löten auf eine solche Weise durchgeführt wird, dass das Material durch Diffusion an den rostfreien Stahl gebunden wird.

24. Verfahren nach einem der Ansprüche 19 bis 23, wobei eine der Wärmetauschplatten eine äußere Wärmetauschplatte mit einem jeweiligen äußeren Oberflächenbereich bildet, der einen jeweiligen Durchgangskanal umgibt und wobei der Schritt des Aufbringens ein Aufbringen des Materials auf den äußeren Oberflächenbereich umfasst, um die Verbindungsfläche zu bilden.

25. Verfahren nach einem der Ansprüche 19 bis 24, wobei eine der Wärmetauschplatten eine äußere Wärmetauschplatte mit einem jeweiligen äußeren Oberflächenbereich bildet, der einen jeweiligen Durchgangskanal umgibt und wobei das Verfahren den folgenden Schritt umfasst:
Aufbringen eines Verbindungselementes auf den äußeren Oberflächenbereich an jedem Durchgangskanal vor dem Verbindungsschritt, wobei das Verbindungselement die Verbindungsfläche bildet.

26. Verfahren nach Anspruch 25, wobei das Verbindungselement eine Primäroberfläche hat und wobei der Schritt des Aufbringens ein Aufbringen des Materials auf die Primäroberfläche umfasst, um die Verbindungsfläche mittels und während des Lötprozesses zu bilden.

27. Verfahren nach Anspruch 26, umfassend den Eingangsschritt, dass die Primäroberfläche durch Reinigungsstrahlen oder ähnliche aufgeraut wird, um ein raues Oberflächenfinish zu erhalten, so dass ein Befeuchten der primären Oberfläche mit dem Material während des Lötprozesses ermöglicht wird.

28. Verfahren nach Anspruch 25 bis 27, wobei das Verbindungselement (8, 9) im Wesentlichen aus rostfreiem Stahl hergestellt ist, der Chrom enthält.

29. Verfahren nach Anspruch 28, wobei das Verbindungselement (8, 9) im Wesentlichen aus einer Legierung hergestellt ist, die Kupfer und Nickel enthält.

30. Verfahren nach Anspruch 29, wobei die Legierung 55-95 Gew.-% Kupfer und 5-45 Gew.-% Nickel enthält.

## Revendications

1. Échangeur de chaleur à plaques comprenant un nombre de plaques d'échangeur de chaleur (1, 1', 1 "), qui sont agencées les unes à côté des autres et reliées les unes aux autres au moyen d'une liaison brasée,
dans lequel les plaques d'échangeur de chaleur (1, 1', 1") sont sensiblement faites d'acier inoxydable contenant du chrome,
dans lequel l'échangeur de chaleur à plaques comprend un nombre de canaux à orifice (4) s'étendant à travers au moins certaines des plaques d'échangeur de chaleur, et dans lequel
un ou plusieurs des canaux à orifice (4) sont entourés par une surface de raccordement (5) pour le raccordement du canal à orifice à un élément de tuyau (6), **caractérisé en ce que** la surface de raccordement (5) comprend un matériau qui permet le brasage dudit élément de tuyau (6) sur la surface de raccordement (5) de manière plus facile que sur l'acier inoxydable, dans lequel ledit matériau est plus sensible à la réduction que le dioxyde de chrome.

2. Échangeur de chaleur à plaques selon la revendication 1, **caractérisé en ce que** ledit matériau comprend du nickel.

3. Échangeur de chaleur à plaques selon une quelconque des revendications 1 et 2, **caractérisé en ce que** ledit matériau comprend du cuivre.

4. Échangeur de chaleur à plaques selon une quelconque des revendications précédentes, **caractérisé en ce que** ladite liaison brasée des plaques d'échangeur de chaleur est accomplie par l'intermédiaire d'un procédé de brasage.

5. Échangeur de chaleur à plaques selon une quelconque des revendications précédentes, **caractérisé en ce que** ledit matériau est lié à l'acier inoxydable par l'intermédiaire de diffusion.

6. Échangeur de chaleur à plaques selon les revendications 4 et 5, **caractérisé en ce que** ladite diffusion est accomplie au cours dudit procédé de brasage.

7. Échangeur de chaleur à plaques selon une quelconque des revendications précédentes, **caractérisé en ce qu'**une desdites plaques d'échangeur de chaleur (1, 1', 1") forme une plaque d'échangeur de chaleur extérieure (1') qui possède une zone de surface extérieure respective entourant un canal à orifice respectif.

8. Échangeur de chaleur à plaques selon la revendication 7, **caractérisé en ce que** ledit matériau est fourni à la zone de surface extérieure pour former ladite surface de raccordement (5).

9. Échangeur de chaleur à plaques selon une quelconque des revendications précédentes, **caractérisé en ce que** l'échangeur de chaleur à plaques comprend un élément de raccordement (8 ; 9) à chaque canal à orifice (4), dans lequel l'élément de raccordement (8, 9) forme ladite surface de raccordement (5).

10. Échangeur de chaleur à plaques selon les revendications 7 et 9, **caractérisé en ce que** l'élément de raccordement (8, 9) est fixé à une zone de surface extérieure.

11. Échangeur de chaleur à plaques selon une quelconque des revendications 9 et 10, **caractérisé en ce que** l'élément de raccordement (8, 9) possède une surface primaire sur laquelle ledit matériau est appliqué pour former ladite surface de raccordement (5).

12. Échangeur de chaleur à plaques selon la revendication 11, **caractérisé en ce que** la surface primaire possède une finition de surface rugueuse, qui est accomplie par l'intermédiaire de projection abrasive ou d'un quelconque procédé de rugosification similaire et qui facilite le mouillage de la surface primaire avec ledit matériau.

13. Échangeur de chaleur à plaques selon les revendications 4 et 12, **caractérisé en ce que** ledit matériau a été appliqué sur la surface primaire au moyen et au cours du procédé de brasage.

14. Échangeur de chaleur à plaques selon une quelconque des revendications 9 à 13, **caractérisé en ce que** l'élément de raccordement (8, 9) est sensiblement fait de matériau inoxydable contenant du chrome.

15. Échangeur de chaleur à plaques selon une quelconque des revendications 9 et 10, **caractérisé en ce que** l'élément de raccordement (8, 9) est fait d'un alliage contenant sensiblement du cuivre et du nickel.

16. Échangeur de chaleur à plaques selon la revendication 15, **caractérisé en ce que** ledit alliage contient de 55 à 95 pour cent en poids de cuivre et 5 à 45 pour cent en poids de nickel.

17. Échangeur de chaleur à plaques selon une quelconque des revendications 9 et 16, **caractérisé en ce que** l'élément de raccordement est conçu sous forme de mamelon de tuyau (8).

18. Échangeur de chaleur à plaques selon une quelconque des revendications 9 et 16, **caractérisé en ce que** l'élément de raccordement est conçu sous forme de rondelle (8).

19. Procédé pour fabriquer un échangeur de chaleur à plaques comprenant un nombre de plaques d'échangeur de chaleur, qui sont sensiblement faites d'acier inoxydable contenant du chrome, et comprenant un nombre de canaux à orifice s'étendant à travers au moins certaines des plaques d'échangeur de chaleur,
dans lequel un ou plusieurs des canaux à orifice sont entourés par une surface de raccordement pour le raccordement du canal à orifice à un élément de tuyau,
dans lequel le procédé comprend les étapes consistant à :
appliquer un matériau, qui forme la surface de raccordement et qui permet le brasage dudit élément de tuyau sur la surface de raccordement de manière plus facile que sur l'acier inoxydable, dans lequel ledit matériau est plus sensible à la réduction que le dioxyde de chrome,
agencer les plaques d'échangeur de chaleur les unes à côté des autres, et
joindre les plaques d'échangeur de chaleur les unes aux autres au moyen d'une liaison brasée.

20. Procédé selon la revendication 19, dans lequel ledit matériau comprend du nickel.

21. Procédé selon une quelconque des revendications 19 et 20, dans lequel ledit matériau comprend du cuivre.

22. Procédé selon une quelconque des revendications 19 à 21, dans lequel ladite étape de jonction comprend un procédé de brasage avec le brasage des plaques d'échangeur de chaleur dans des conditions de pression similaires à un vide ou dans une atmosphère avec un gaz sensiblement inerte ou un gaz réducteur.

23. Procédé selon une quelconque des revendications 19 à 22, dans lequel le brasage est réalisé de manière telle que ledit matériau est lié à l'acier inoxydable par diffusion.

24. Procédé selon une quelconque des revendications 19 à 23, dans lequel une desdites plaques d'échangeur de chaleur forme une plaque d'échangeur de chaleur extérieure possédant une zone de surface extérieure respective entourant un canal à orifice respectif et dans lequel ladite étape d'application comprend le fait que ledit matériau est appliqué sur la zone de surface extérieure pour former ladite surface de raccordement.

25. Procédé selon une quelconque des revendications 19 à 24, dans lequel une desdites plaques d'échangeur de chaleur forme une plaque d'échangeur de chaleur extérieure possédant une zone de surface extérieure respective entourant un canal à orifice respectif et dans lequel le procédé comprend l'étape consistant à :
appliquer un élément de raccordement sur la zone de surface extérieure à chaque canal à orifice avant ladite étape de jonction, dans lequel l'élément de raccordement forme ladite surface de raccordement.

26. Procédé selon la revendication 25, dans lequel l'élément de raccordement possède une surface primaire et dans lequel ladite étape d'application comprend le fait d'appliquer ledit matériau sur la surface primaire pour former ladite surface de raccordement au moyen et au cours dudit procédé de brasage.

27. Procédé selon la revendication 26, comprenant l'étape initiale rugosifiant la surface primaire par projection ou analogue pour accomplir la finition de surface rugueuse facilitant le mouillage de la surface primaire par ledit matériau au cours dudit procédé de brasage.

28. Procédé selon les revendications 25 à 27, dans lequel l'élément de raccordement (8, 9) est sensiblement fait d'acier inoxydable contenant du chrome.

29. Procédé selon la revendication 25, dans lequel l'élément de raccordement (8 ; 9) est sensiblement fait d'un alliage contenant sensiblement du cuivre et du nickel.

30. Procédé selon la revendication 29, dans lequel ledit alliage comprend 55 à 95 pour cent en poids de cuivre et 5 à 45 pour cent en poids de nickel.
